Europäisches Patentamt

**European Patent Office**

**Office européen des brevets**

(19)

(11) Veröffentlichungsnummer: **0 063 151**
**B1**

(12) **EUROPÄISCHE PATENTSCHRIFT**

(45) Veröffentlichungstag der Patentschrift:
02.04.86

(21) Anmeldenummer: **81902990.1**

(22) Anmeldetag: **22.10.81**

(86) Internationale Anmeldenummer:
**PCT/HU 81/00042**

(87) Internationale Veröffentlichungsnummer:
**WO 82/01432 (29.04.82 Gazette 82/11)**

(51) Int. Cl.⁴: **G 06 F 15/40**, G 06 K 19/00

(54) **MANUELLES DATENSPEICHERMITTEL ZUR FESTSTELLUNG VON ZUSAMMENHÄNGEN ZWISCHEN DATENMENGEN.**

(30) Priorität: **22.10.80 HU 255880**

(43) Veröffentlichungstag der Anmeldung:
**27.10.82 Patentblatt 82/43**

(45) Bekanntmachung des Hinweises auf die Patenterteilung:
**02.04.86 Patentblatt 86/14**

(84) Benannte Vertragsstaaten:
**AT CH DE FR GB LI SE**

(56) Entgegenhaltungen:
**FR - A - 2 223 747**
**GB - A - 1 027 305**
**US - A - 3 480 763**
**US - A - 4 027 884**

(73) Patentinhaber: **LICENCIA Találmányokat Ertékesitö és Innovácios Külkereskedelmi Vállalat, Bajcsy Zsilinszky ut 16, H-1051 Budapest (HU)**

(72) Erfinder: **BALINT, Géza, Palánta utca 19, H-1025 Budapest (HU)**
Erfinder: **BOZSOKY, Sándor, Szentendrei ut 10, H-1035 Budapest (HU)**
Erfinder: **DOMJAN, László, Ságvári tér 1, H-1054 Budapest (HU)**

(74) Vertreter: **Patentanwälte Viering & Jentschura, Steinsdorfstrasse 6, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein manuelles Datenspeichermittel zur Feststellung von Zusammenhängen zwischen Datenmengen, insbesondere zur Anwendung als diagnostisches und pharmazeutisches Hilfsmittel.

Bei einem bekannten manuellen Datenspeichermittel (FR-A-2 223 747) ist ein Bündel aufeinandergelegter Datenkarten und eine unter diesen angeordnete Dekodierungskarte vorhanden, wobei die Karten in ihrem geometrischen Mittelpunkt um eine gemeinsame Achse unabhängig voneinander um 180° verschwenkbar sind und die Datenkarten jeweils eine Registernase mit Informationen zur Identifizierung der jeweiligen Datenkarte aufweisen. Die Datenkarten weisen beidseitig der Achse jeweils ein Datenfeld auf, in welchem die Daten in Form transparenter und nichttransparenter Adressenfelder angegeben sind, wobei die transparenten Adressenfelder und die nichttransparenten Adressenfelder des einen Datenfeldes bezüglich der Achse rotationssymmetrisch spiegelbildlich zu denen des anderen Datenfeldes angeordnet sind. Die Datenkarten entsprechen z.B. den gemeinsamen Bauteilen von Möbelstücken, die sich nach der Abmessung der Bauteile und daher dem Verkaufspreis unterscheiden. Die Dekodierungskarte trägt auf ihrem einen Datenfeld die unterschiedlichen Abmessungsinformationen und auf ihrem anderen Datenfeld die unterschiedlichen Preisinformationen derart, dass je nach der Schwenkstellung der Datenkarten bis in eine Stellung, in welcher sich alle Datenkarten mit der Dekodierungskarte überdecken, jeweils durch ein allen Datenkarten gemeinsames transparentes Adressenfeld hindurch auf der Dekodierungskarte die Abmessung des ausgewählten Möbelstücks, und nach Verschwenken der Dekodierungskarte um 180° der Preis des Möbelstücks abgelesen werden kann. Das bekannte Datenspeichermittel ist daher nicht derart gestaltet, dass durch gemeinsames Herausschwenken nur eines Teils der Datenkarten aus dem Kartenbündel anhand des Lichtdurchlasses an gegebenen Stellen festgestellt werden kann, ob zwischen den Daten dieser herausgeschwenkten Karten ein Zusammenhang besteht und worin dieser besteht.

Zur manuellen Feststellung von Zusammenhängen zwischen Datenmengen wurden jedoch bereits sogenannte «Durchsichtslochkarten» benutzt, die nach gewissen Gesichtspunkten zusammengestellte Datenmengen enthielten, und durch Aufeinanderlegen dieser Lochkarten sowie mit Hilfe einer geeigneten Dekodierungskarte konnte man aufgrund des Lichtdurchlasses an gegebenen Stellen schlussfolgern, ob zwischen gegebenen Datenmengen ein Zusammenhang besteht und worin dieser Zusammenhang besteht.

Die Anwendung dieser Lochkarten war jedoch recht umständlich, weil diese nach jeder Benützung wieder genau geordnet werden mussten, was bei einer grossen Anzahl von verwendeten bzw. ausgewählten Karten einen recht grossen Zeitaufwand benötigte. Aus diesem Grunde war die Anwendung der Lochkarten in zahlreichen Fachgebieten unzweckmässig, sogar unmöglich. Gleichzeitig besteht jedoch ein Bedarf an einem leicht handhabbaren manuellen Datenspeichermittel, das aufgrund des Prinzips der «Durchsichtslochkarten» eine schnelle Informationsgewinnung bzw. die einfache und schnelle Feststellung von Zusammenhängen zwischen bestimmten Datenmengen ermöglicht. Ein mögliches Anwendungsgebiet für dieses Datenspeichermittel wäre z.B. die ärztliche Diagnostik, die Auswahl der richtigen Arzneimittel oder auch die technische Fehlerdiagnostik. Auf diesen (und noch zahlreichen anderen) Gebieten kann eine Erscheinung, ein Symptom, zahlreiche Gründe haben und die einzelnen Gründe können auch unterschiedliche Auswirkungen oder Folgerungen auslösen. Mit Hilfe der Lochkarten könnten im Falle einer gegebenen Symptom- oder Erscheinungsgruppe gewisse Gründe durch Aussiebung der die Zusammenhänge ausschliessenden Widersprüche wahrscheinlich gemacht werden, und gewisse Gründe könnten eindeutig ausgeschlossen werden. Dadurch könnte man bei der Suche nach dem richtigen Grund einen bedeutenden Zeitaufwand einsparen.

Aufgabe der Erfindung ist die Schaffung eines manuellen Datenspeichermittels zur Feststellung von Zusammenhängen zwischen Datenmengen, welches Datenspeichermittel aufgrund des Prinzips der «Durchsichtslochkarten» eine schnelle Feststellung von bestimmten Zusammenhängen zwischen den Daten einer Auswahl der Datenkarten ermöglicht, einfach bedienbar ist, kleinen Platzbedarf aufweist und gleichzeitig als eine gut brauchbare Informationssammlung dient.

Die gestellte Aufgabe wird erfindungsgemäss durch die Merkmale aus dem Anspruch 1 gelöst. Bevorzugte Ausgestaltungen der Erfindung sind in den Ansprüchen 2 bis 14 angegeben.

Anhand der Registerkarte und der Registernasen – solch eine Anordnung ist aus der Bürotechnik wohl bekannt – kann man daher aus der Gesamtheit der Datenkarten entsprechend ausgewählter Kriterien die zutreffenden Datenkarten ausschwenken und jenachdem, ob und an welcher Stelle des Kartenbündels aus den ausgewählten ausgeschwenkten Datenkarten Lichtdurchlässigkeit erkennbar ist, feststellen, ob ein Zusammenhang zwischen den ausgewählten Kriterien besteht. Besteht ein solcher Zusammenhang, so kann man anhand der Dekodierungskarte bestimmen, welcher Art dieser Zusammenhang ist.

Das erfindungsgemässe Datenspeichermittel wird ausführlicher anhand der Zeichnung und von Anwendungsbeispielen erklärt. Die Zeichnung und die Anwendungsbeispiele stellen eine für medizindiagnostische Zwecke dienende Ausführungsform des erfindungsgemässen manuellen Datenspeichermittels vor, wobei die Datenkarten aus Lochkarten ausgebildet sind. Es zeigen:

Fig. 1 die Draufsicht eines erfindungsgemässen Datenspeichermittels, mit nach hinten verschwenkten Datenkarten einer Symptomgruppe, bedeckt von einer Dekodierungskarte;

Fig. 2 eine als Symptomkarte ausgebildete Datenkarte;

Fig. 3 das Datenspeichermittel nach Fig. 1 im zusammengeschwenkten Zustand, oben mit einer Registerkarte;

Fig. 4 eine Dekodierungskarte, und

Fig. 5 die Seitenansicht des Datenspeichermittels nach Fig. 1.

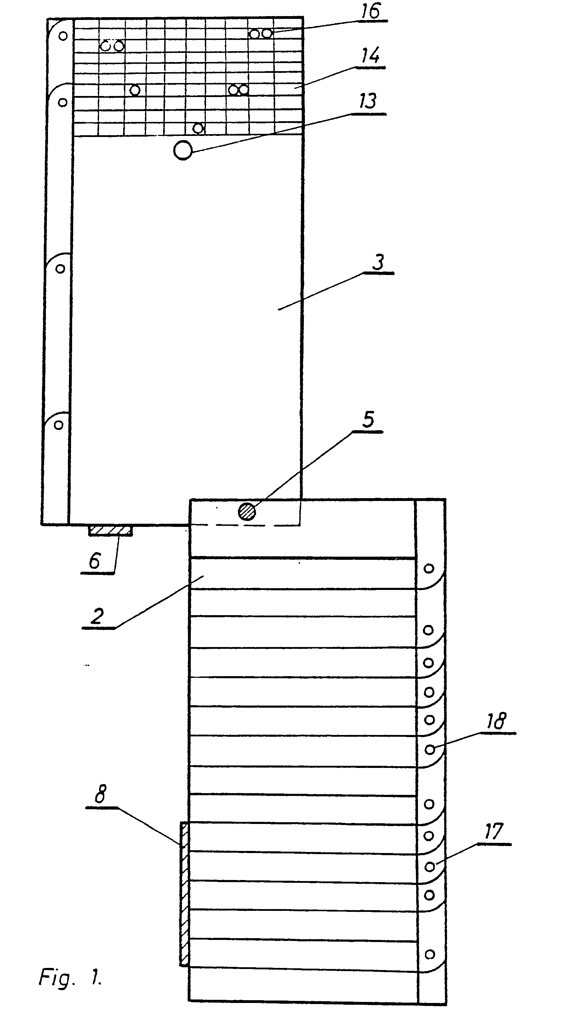

Wie in Fig. 1 ersichtlich, weist das erfindungsgemässe manuelle Datenspeichermittel aus Lochkarten ausgebildete und im Ausführungsbeispiel als Symptomkarte verwendete Datenkarten 1 sowie eine Registerkarte 2 und eine Dekodierungskarte 3 auf, wobei die letztere zweckmässigerweise ganz oben, eventuell unmittelbar unter der Registerkarte 2, angeordnet ist. In Fig. 1 befindet sich die Dekodierungskarte 3 über den nach hinten verschwenkten Datenkarten 1 und die Registerkarte 2 liegt auf den in Grundstellung befindlichen Datenkarten 1 auf. Die Karten des Kartenbündels sind in der Nähe ihrer oberen Ränder auf eine Achse 5 aufgefädelt, um welche sie voneinander unabhängig (zweckmässigerweise um 180°) verschwenkbar sind. Das Kartenbündel ist in seinem aufgefädelten Zustand auf eine mit einem seitlichen Anschlag 8 versehene, in Fig. 1 durch die Karten abgedeckte Tragplatte 4 aufgelegt, wobei der Anschlag 8 senkrecht zu der Ebene der Tragplatte 4' angeordnet ist, die um die Achse 5 in die gleiche Lage verschwenkt ist wie die nach hinten verschwenkten Datenkarten 1. Die Tragplatte 4' weist einen ihre der Achse 5 näherliegende Schmalseite begrenzenden Anschlag 6 auf. In der Tragplatte ist eine Einstellöffnung 10 ausgebildet, in welche ein die genaue gegenseitige Überdeckung der nach hinten verschwenkten Karten gewährleistendes und durch ihre entsprechende Einstellöffnungen 13 hindurchgeführtes Hilfsmittel 20 eingesteckt werden kann, dessen eines Ende mit einem konischen Endstück 19, und dessen anderes Ende mit einem Haken 22 versehen ist. (Die Tragplatte 4' kann ggf. auch als Deckel des Kartenbündels ausgebildet werden, der unter die zu verschwenkenden Karten verschwenkt werden kann.)

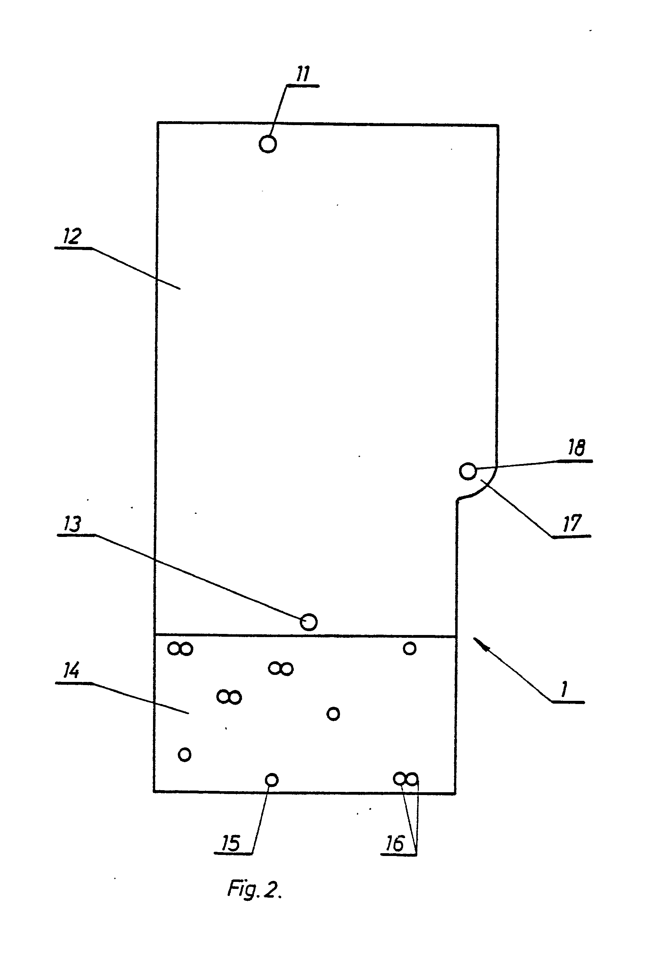

In Fig. 2 ist eine als Symptomkarte verwendete Datenkarte 1 dargestellt. Die Datenkarte 1 ist auf ein freies Feld 12 und ein Zeichenfeld 14 (ggf. auf ein Lochkartenfeld) aufgeteilt. Am oberen Teil des freien Feldes 12 ist eine zur Auffädelung auf die Achse 5 dienende Öffnung 11 ausgebildet und in dem an das Zeichenfeld 14 angrenzenden unteren Teil des freien Feldes 12 ist eine Einstellöffnung 13 ausgebildet. Das freie Feld 12 kann zweckmässigerweise zur Speicherung solcher von den im Zeichenfeld 14 gespeicherten Daten unabhängigen Informationen verwendet werden, deren Auffinden z.B. mittels zusätzlicher Registerkarten ermöglicht wird. Für diesen Zweck können beide Seiten des freien Feldes 12 der Datenkarte 1 verwendet werden.

Die einzelnen Adressen bzw. ggf. die aus zwei nebeneinanderliegenden Adressen bestehenden Adressengruppen des Zeichenfeldes 14, welche Adressen hier bestimmten Krankheiten entsprechen, sind entsprechend der Wahrscheinlichkeit des durch die gegebene Lochkarte (Datenkarte) vertretenen Symptoms mit einer einfachen Lochung 15 oder mit einer doppelten Lochung 16 versehen, bzw. wenn kein Zusammenhang mit der ersten Datenmenge vorhanden ist, so wird die entsprechende Adresse der Adressengruppe nicht gelocht. Die Wahrscheinlichkeit eines Symptoms kann natürlich auch durch Lochungen anderer Form und Grösse ausgedrückt werden, zweckmässigerweise so, dass bei einer grösseren Wahrscheinlichkeit eine mehr Licht durchlassende Lochung verwendet wird.

Am Seitenrand der Datenkarte 1 ist eine abgerundete Registernase 17 ausgebildet, die zweckmässigerweise mit einem Loch 18 versehen ist. Das letztere erleichtert das Herausziehen der einzelnen Datenkarten 1 aus dem Kartenbündel, insbesondere bei Verwendung eines mit einem Haken 22 versehenen Hilfsmittels 20. Das das Herausziehen der Karten erleichternde Ende des Hilfsmittels 20 kann aber auch anders, z.B. mit einer Haftscheibe versehen, ausgebildet sein. Das sichtbare Ende der Registernase 17 ist in einer solchen Höhe ausgebildet, dass es mit derjenigen Informationslinie der über den Datenkarten 1 befindlichen Registerkarte 2 fluchtet, die die zur gegebenen Registernase 17 gehörende Symptomkarte benennt und identifiziert.

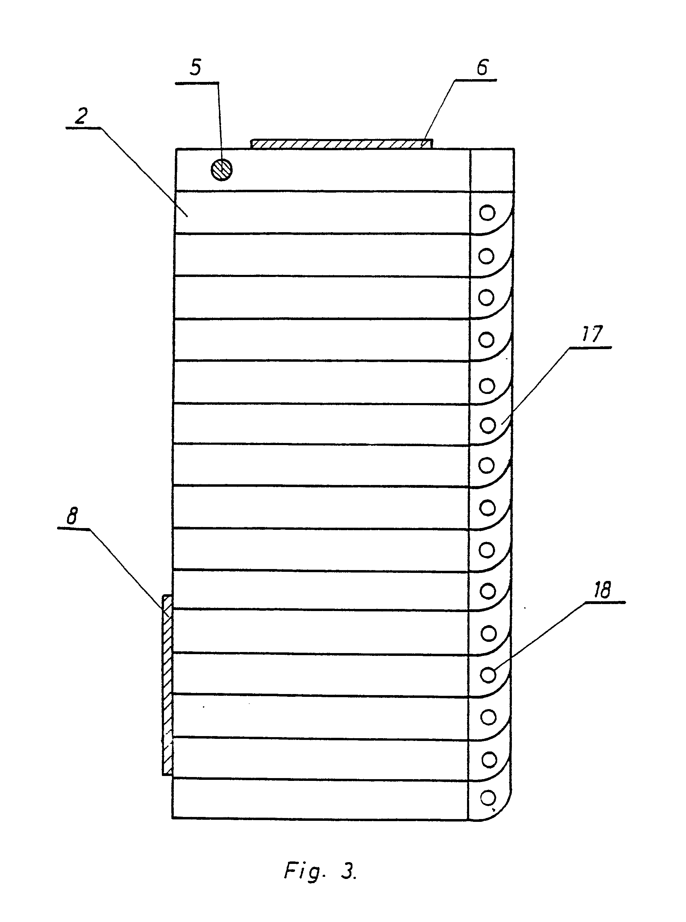

In Fig. 3 ist das erfindungsgemässe Datenspeichermittel ohne Dekodierungskarte 3 im zusammengeschwenkten Zustand dargestellt, wobei das Kartenbündel von den Anschlägen 6 und 8 der Tragplatten 4' und 4 zusammengehalten ist. Ganz oben befindet sich die Registerkarte 2, deren untereinander angeordneten Informationslinien mit dem sichtbaren Ende der Registernase 17 je einer Datenkarte 1 zusammenfallen, wodurch die einzelnen Symptomkarten identifiziert werden können. Die Breite der Registerkarte 2 ist natürlich so bestimmt, dass diese die Registernasen 17 der Datenkarten 1 nicht überdeckt. Es ist zweckmässig, die unmittelbar untereinander befindlichen Informationslinien der Registerkarte 2 mit den zugehörigen Registernasen 17 abwechselnd mit voneinander abweichenden Farben zu bezeichnen, damit sie besser unterschieden werden können. Die Registerkarte 2 weist – ähnlich wie die Datenkarte 1 – eine Öffnung 11 für die Achse 5 auf.

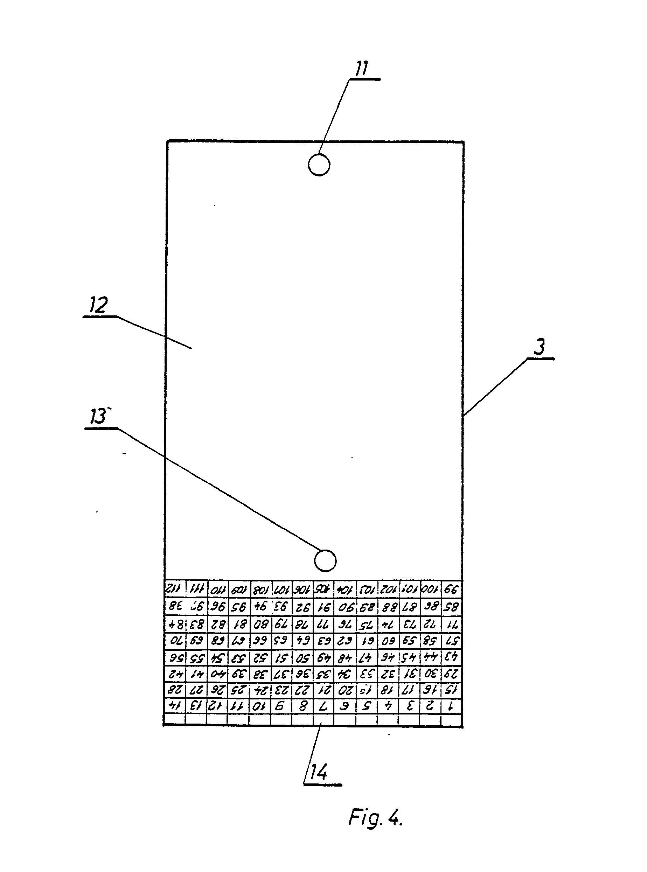

In Fig. 4 ist eine Dekodierungskarte 3 dargestellt, die zweckmässigerweise aus einem durchsichtigen oder durchscheinenden Material, z.B. aus einer durchsichtigen Kunststoffplatte besteht, und die auf ihrem dem Zeichenfeld 14 der Datenkarten 1 entsprechenden Teil mit einem die Adressen bzw. Adressengruppen des Zeichenfeldes 14 begrenzenden Quadratnetz versehen ist, wobei die Adressen bzw. Adressengruppen bestimmten Krankheiten entsprechen. In die einzelnen Kästchen des Quadratnetzes sind Kodenummern eingetragen, die im gegebenen Fall je einer Krankheit zugeordnet sind. Die Bedeutung der Kodenummern kann eventuell von einer separaten Liste abgelesen werden; es ist aber vorteilhafter, wenn sie auf der Dekodierungskarte selbst aufgezeichnet ist, und zwar unterhalb des Quadratnetzes. Es ist aber auch vorstellbar, dass die Bedeutung der Kodenummern auf einer zusätzlichen Registerkarte erklärt ist, die z. B. unmittelbar unter der die Symptome identifizierenden Registerkarte 2 angeordnet ist. Die Dekodierungskarte 3, ähnlich wie die Datenkarten 1, ist mit einer Öffnung 11 für die Achse 5 und mit einer Einstellöffnung 13 versehen.

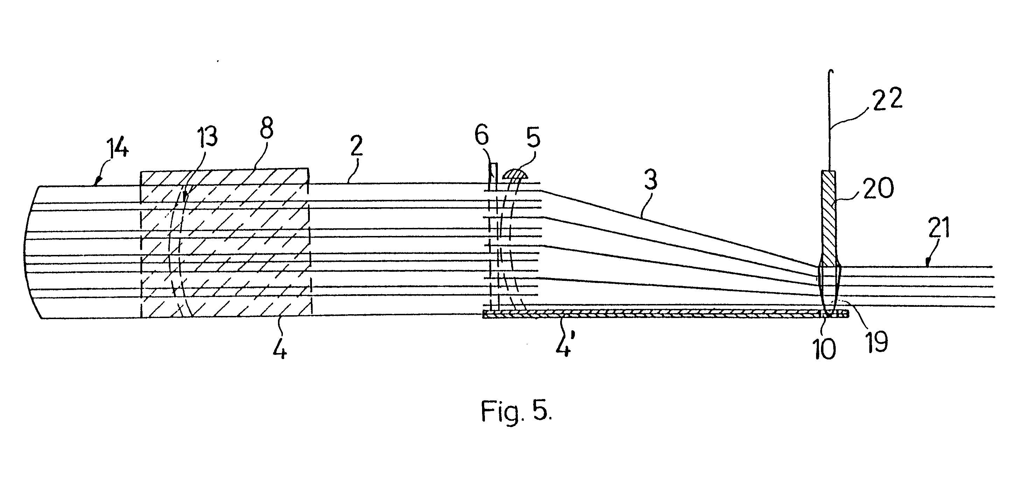

Fig. 5 zeigt die Seitenansicht des erfindungsgemässen Datenspeichermittels entsprechend Fig. 1, also während der Benützung. Aus der Figur ist deutlich ersichtlich, dass im Falle eines dicken Kartenbündels die Achse 5 leicht gekrümmt ausgebildet ist, damit die nach hinten verschwenkten Karten einander genau überdecken, welche Lage mit Hilfe des durch die Einstellöffnungen 13 der Karten hindurchgeführten und in die Einstellöffnung 10 der Tragplatte 4' eingesteckten Hilfsmittels 20 fixiert werden kann. Die so ausgewählten und in Deckung gebrachten Karten gegen Licht haltend kann man sofort feststellen, welche Krankheit aufgrund der gegebenen Symptome in Frage kommen oder vermutet werden kann, je nach dem, an welchen Adressen ein bemerkbarer Lichtdurchlass wahrgenommen werden kann.

Das Gesagte ist auch in dem Falle gültig, wenn das erfindungsgemässe Datenspeichermittel z. B. zur Auswahl von geeigneten Medikamenten verwendet wird, mit dem Unterschied, dass in solchen Fällen die einzelnen Datenkarten kein Symptom, sondern eine Krankheit der einen anderen Umstand, der für die Auswahl des Arzneimittels von Bedeutung ist, bedeuten, und die einzelnen Adressen oder Adressengruppen bestimmten Medikamenten entsprechen.

Der praktische Einsatz des erfindungsgemässen Datenspeichermittels erfolgt so, dass z. B. bei der Feststellung einer Krankheit die Tragplatte 4' unter der Tragplatte 4 weg um 180° nach hinten verschwenkt wird, dann die den einzelnen Symptomen des Kranken entsprechenden Datenkarten 1 mit der Hand oder mit Hilfe des Hilfsmittels 20 herausgezogen und bis zum Anschlag 6 ebenfalls nach hinten verschwenkt werden, wobei sie auf der Tragplatte 4' aufliegen. Nach dem Herausziehen und Verschwenken sämtlicher aktuellen Symptomkarten wird auch die Dekodierungskarte 3 über die Symptomgruppe 21 verschwenkt und nach dem deckungsgleichen Anordnen und Fixieren der Karten mit Hilfe des Hilfsmittels 20 kann man diese gegen Licht haltend feststellen, in welchen Kästchen des Quadratnetzes der Dekodierungskarte 3 ein Lichtdurchlass wahrgenommen werden kann. Nach Identifizierung der Kästchen kann man aus dem Grad der Lichtdurchlässigkeit nicht nur auf die Wahrscheinlichkeit der einzelnen Krankheiten schliessen, sondern auch auf das Mass der Wahrscheinlichkeit. Die richtige Diagnose wird dadurch praktisch nicht beeinflusst, wenn einige Karten irrtümlich herausgezogen werden, da etwas Licht durch die lichtdichten Adressen austreten kann.

Nach Identifizierung der möglichen Krankheiten werden die Karten um die Achse 5 bis zum Anschlag 8 zurückgeschwenkt. Nach dem fächerartigen Zurückschwenken geraten die Karten wieder in geordneten Zustand und können sofort beim nächsten Patienten eingesetzt werden.

Im folgenden werden zwei konkrete Beispiele für die Anwendung des erfindungsgemässen Datenspeichermittels vorgestellt:

Beispiel 1:
Feststellung rheumatologischer Krankheiten mit Hilfe eines diagnostischen Datenspeichermittels Aus den allgemeine und anamnetische Informationen tragenden Datenkarten und den als Symptomkarten verwendeten Datenkarten 1 werden um die Achse 5 die Karten «MANN» und «JUNG», die Symptomkarte «MONARTHRITIS», von den Hauterscheinungen die Karte «PSORIASIS» und von den Schleimhautsymptomen die Karte «URETHRITIS» nach hinten verschwenkt. Die verschwenkten Karten werden mit Hilfe des Hilfsmittels 20 miteinander in genaue Deckung gebracht. Wenn die Karten nun gegen Licht gehalten werden, so kann festgestellt werden, dass das Licht z. B. im Kästchen mit der Kodenummer 49 des Zeichenfeldes 14 durch beide Lochkartenöffnungen hindurchtritt, jedoch im Kästchen mit der Kodenummer 51 nur durch eine einzige Öffnung. Nach der Identifizierung der Kodenummern kann also festgestellt werden, dass bei diesem Kranken die gegebenen Symptome mit grösster Wahrscheinlichkeit auf eine sogenannte «Reiter»-Krankheit hinweisen; es besteht aber auch die Möglichkeit, wenn auch mit geringerer Wahrscheinlichkeit, einer «Postdysentherischen Arthritis», was jedoch mit einer gezielten Laboruntersuchung eventuell eindeutig ausgeschlossen werden kann.

Beispiel 2:
Auswahl der Arzneimittel für rheumatische und damit im Zusammenhang stehende andere Krankheiten mit Hilfe eines erfindungsgemässen Datenspeichermittels

Aus dem Kartenbündel wird zuerst die der Krankheit «RHEUMATOID ARTHRITIS» zugeordnete Lochkarte herausgezogen und nachdem der Kranke auch Zuckerkrankheit und ein akutes Zwölffingerdarmgeschwür hat, werden die Karten «DIABETES MELLITUS» und «ACUT ULCUS» ebenfalls ausgewählt und nach hinten verschwenkt. Das Licht tritt durch die miteinander in Deckung gebrachten Karten an den den Adressen «INDOMETHACIN SUPPOSITORIUM» und «LOKALES STEROID» entsprechenden Kodestellen jeweils durch eine Öffnung hindurch, also bei diesem Kranken kommen in erster Linie diese beiden Medikamente in Frage.

Ausser den erwählten Anwendungsgebieten kann das erfindungsgemässe Datenspeichermittel für viele andere Zwecke, z. B. für die technische Fehlerdiagnostik verwendet werden.

Das erfindungsgemässe manuelle Datenspeichermittel weist über die ursprüngliche Zielstellung hinaus eine Reihe von weiteren Vorteilen auf:

– Die freien Felder 12 der Datenkarten 1 können zur Speicherung von verschiedenen, mit dem Thema verbundenen, aber von der im Zeichenfeld 14 gespeicherten Datenmenge unabhängigen Informationen benutzt werden, z.B. zur Beschreibung der einzelnen Krankheiten oder zur Darlegung von Arzneimitteln, die mit Hilfe von einer oder mehreren zusätzlichen Registerkarten leicht ausgesucht werden können.

– Infolge seiner taschenbuchförmigen Gestaltung ist das erfindungsgemässe Mittel leicht tragbar und bildet eine überall einsetzbare kompakte Einheit.

– Die gespeicherte Informationsmenge kann praktisch beliebig erweitert oder erneuert werden.

– Das für ein bestimmtes Fachgebiet ausgearbeitete erfindungsgemässe Datenspeichermittel kann durch die Übersetzung der Informationen der Registerkarten ohne weiteres für jede Sprache einsetzbar gemacht werden.

– Das erfindungsgemässe Mittel fördert praktisch schnellere Informationen als ein Computer, wenn man auch die Nebenzeiten betrachtet, wobei die Kosten unvergleichbar niedriger sind.

– Durch die Anwendung des erfindungsgemässen Datenspeichermittels kann der Arzt auch relativ seltene Krankheitsbilder beurteilen und er kann auch auf einem ihm weniger vertrauten Fachgebiet eine mit grosser Wahrscheinlichkeit richtige Diagnose treffen bzw. Behandlung festlegen.

– Das erfindungsgemässe Datenspeichermittel ist auch als Hilfsmittel für das Medizinstudium bedeutsam, weil die Lehrbücher meistens die einzelnen Krankheiten behandeln, obwohl der Arzt in der Praxis meist den Symptomen begegnet, aus welchen er die Krankheit feststellen muss. Nachdem auf den einzelnen Karten auch für die Beschreibung der einzelnen Krankheiten genügend Platz vorhanden ist, sind die beiden Informationen praktisch in einem Taschenbuch zusammengefasst. So besteht also die Möglichkeit, nach Aufschlagen der sich durch die Datenkarten (Lochkarten) als wahrscheinlich erweisenden Krankheiten nach deren typischen Symptomen zu suchen.

– Das erfindungsgemässe Mittel ist auch dazu geeignet, dass in den Entwicklungsländern, wo ein grosser Arztmangel besteht, die Schwestern oder die Assistenten eine gewisse Sortierung der Kranken nach speziellen Krankheiten vornehmen können.

– Das erfindungsgemässe manuelle Datenspeichermittel kann schliesslich auch für Propaganda- und Werbungszwecke ausgezeichnet eingesetzt werden.

**Patentansprüche**

1. Manuelles Datenspeichermittel zum Feststellen von Zusammenhängen zwischen Datenmengen, insbesondere zur Anwendung als diagnostisches und pharmazeutisches Hilfsmittel, mit einer Mehrzahl von Datenkarten (1), die entsprechend des Bestehens oder des Fehlens eines Zusammenhanges zwischen zwei Datenmengen lichtdurchlässige oder lichtdichte Adressen aufweisen und jeweils mit einer Registernase (17) versehen sind, sowie wenigstens einer Dekodierungskarte (3), wobei die Karten (1, 3) auf eine gemeinsame Achse (5) aufgefädelt und um diese Achse (5) unabhängig voneinander verschwenkbar sind und die Gesamtheit der Datenkarten (1) einer ersten Datenmenge und die Gesamtheit der Adressen der einzelnen Datenkarten (1) einer zweiten Datenmenge entspricht und auf der Dekodierungskarte den Adressen der einzelnen Datenkarten Kodenummern der zweiten Datenmenge zugeordnet sind, dadurch gekennzeichnet, dass auf die gemeinsame Achse (5) über den Datenkarten (1) und der Dekodierungskarte (3) wenigstens eine Registerkarte (2) aufgefädelt ist, auf welcher die einzelnen Elemente der ersten Datenmenge identifizierende Informationen aufgezeichnet sind, und die Registernasen (17) der Datenkarten (1), jeweils neben die Registerkarte (2) hinausreichend stufenweise untereinander angeordnet sind und an ihrem sichtbaren Ende mit der die zur gegebenen Registernase (17) gehörende Datenkarte (1) identifizierenden Informationen der Registerkarte (2) fluchtet, und dass auf den Datenkarten (1) die den einzelnen Elementen der zweiten Datenmenge entsprechenden Adressen in Abhängigkeit von der Wahrscheinlichkeit des Zusammenhanges mit der ersten Datenmenge mehr oder weniger lichtdurchlässig ausgebildet sind.

2. Datenspeichermittel nach Anspruch 1, dadurch gekennzeichnet, dass die gemeinsame Achse (5) der Karten (1, 2, 3) zur Sicherstellung eines exakten Aufliegens der verschwenkten Karten (1, 3) leicht gekrümmt ausgebildet ist.

3. Datenspeichermittel nach einem der Ansprüche 1 und 2, wobei das aus den aufgefädelten Karten (1, 2, 3) bestehende Kartenbündel auf eine mit einem seitlichen Anschlag (8) versehene Tragplatte (4) aufgelegt ist, der senkrecht zu der Ebene der Tragplatte (4) ausgerichtet ist und dessen Höhe grösser als die Dicke des Kartenbündels ist, dadurch gekennzeichnet, dass eine unter die verschwenkten Karten (1, 3) verschwenkbare zweite Tragplatte (4') mit einem die geordnete Lage und die genaue gegenseitige Überdeckung der verschwenkten Karten (1, 3) gewährleistenden Anschlag (6) und einer Einstellöffnung (10) versehen ist.

4. Datenspeichermittel nach Anspruch 3, dadurch gekennzeichnet, dass die Datenkarten (1) und die Dekodierungskarte (3) mit je einer mit der Einstellöffnung (10) der verschwenkten Tragplatte (4') fluchtenden und kongruenten Einstellöffnung (13) versehen sind.

5. Datenspeichermittel nach Anspruch 4, dadurch gekennzeichnet, dass es ein durch die Einstellöffnung (13) der verschwenkten Karten (1, 3) hindurch in die Einstellöffnung (10) der verschwenkten Tragplatte (4') einsteckbares, vorzugsweise mit einem konischen Endstück (19) versehenes Hilfsmittel (20) aufweist.

6. Datenspeichermittel nach Anspruch 5, dadurch gekennzeichnet, dass das andere Ende des Hilfsmittels (20) mit einem Haken (22) zum Herausziehen der einzelnen Datenkarten (1) versehen ist.

7. Datenspeichermittel nach einem der Ansprüche 1 bis 6, dadurch gekennzeichnet, dass die Registernase (17) der Datenkarten (1) mit einem ihr Herausziehen erleichternden Loch (18) versehen sind.

8. Datenspeichermittel nach einem der Ansprüche 1 bis 7, dadurch gekennzeichnet, dass die Datenkarten (1) auf ein lichtdurchlässige und lichtdichte Adressen enthaltendes Zeichenfeld (14) und ein freies Feld (12) aufgeteilt sind.

9. Datenspeichermittel nach Anspruch 8, dadurch gekennzeichnet, dass die freien Felder (12) der Datenkarten (1) mit von den Daten des Zeichenfeldes (14) unabhängigen Informationen versehen sind.

10. Datenspeichermittel nach Anspruch 9, dadurch gekennzeichnet, dass das Kartenbündel eine das Auffinden der von den Daten des Zeichenfeldes (14) unabhängigen Informationen des freien Feldes (12) erleichternde zusätzliche Registerkarte enthält.

11. Datenspeichermittel nach einem der Ansprüche 1 bis 10, dadurch gekennzeichnet, dass die Datenkarten (1) aus Lochkarten ausgebildet sind.

12. Datenspeichermittel nach Anspruch 11, dadurch gekennzeichnet, dass den einzelnen Elementen der zweiten Datenmenge je zwei nebeneinanderliegende Adressen des Zeichenfeldes (14) der Lochkarten zugeordnet sind.

13. Datenspeichermittel nach Anspruch 12, dadurch gekennzeichnet, dass von den beiden Adressen der einzelnen Elemente der zweiten Datenmenge bei einer kleineren Wahrscheinlichkeit eines Zusammenhanges nur eine, und bei einer grösseren Wahrscheinlichkeit beide Adressen gelocht sind.

14. Datenspeichermittel nach einem der Ansprüche 1 bis 13, dadurch gekennzeichnet, dass unter der Dekodierungskarte (3) mehrere, jeweils durch eine Registerkarte (2) angeführte Datenkartenreihen übereinander angeordnet sind.

## Claims

1. Manual data storage means for determining correlations between sets of data, particularly for use as a diagnostic and pharmaceutical aid, with a plurality of data cards (1) which have light-permeable and light-impermeable addresses corresponding to the presence or absence of a correlation between two sets of data and which are each provided with a register tab (17), as well as at least one decoding card (3), whereby the cards (1, 3) are threaded on a common shaft (5) and are mutually independently pivotable about this shaft (5), and the totality of the data cards (1) of a first data set corresponds to the totality of the addresses of the individual data cards (1) of a second data set, and on the decoding card the addresses of the individual data cards are associated with code numbers of the second data set characterised in that at least one register card (2) is threaded on the common shaft (5) over the data cards (1) and the decoding card (3), the individual elements of the information identifying the first data set being marked on the register card(s), and the register tabs (17) of the data cards (1) are arranged to project outwardly stepwise beneath each other next to the register card (2) and the visible end of each tab is aligned with the information data of the register card (2) identifying the data card (1) belonging to the register tab (17) concerned, and that the addresses corresponding to the individual elements of the second data set are formed on the data cards (1) more or less light-permeably in dependence on the probability of a correlation with the first data set.

2. Data storage means according to claim 1, characterised in that the common shaft (5) of the cards (1, 2, 3) is lightly curved for securing an exact alignment of the pivoted cards (1, 3).

3. Data storage means according to one of claims 1 and 2, wherein the card bundle consisting of the threaded-up cards (1, 2, 3) is mounted on a carrier plate (4) provided with a lateral abutment (8) which extends perpendicularly to the plane of the carrier plate (4) and which has a height greater than its thickness, characterised in that a second carrier plate (4') is pivotable beneath the pivoted cards (1, 3) and is provided with an abutment (6) which assures the ordered position and exact mutual overlap of the swung cards (1, 3) and with an adjustment aperture (10).

4. Data storage means according to claim 3, characterised in that the data cards (1) and the decoding card (3) are each provided with an adjustment aperture (13) which is aligned and congruent with the adjustment aperture (10) of the pivoted carrier plate (4').

5. Data storage means according to claim 4, characterised in that it is provided with an auxiliary device (20) which is preferably provided with a conical end piece (19) and which can be inserted through the adjustment aperture (13) of the pivoted cards (1, 3) into the adjustment aperture (10) of the pivoted carrier plate (4').

6. Data storage means according to claim 5, characterised in that the other end of the auxiliary device (20) is provided with a hook (22) for pulling out the individual data cards (1).

7. Data storage means according to one of claims 1 to 6, characterised in that the register tabs (17) of the data cards (1) are each provided with a hole (18) closed to facilitate pulling them out.

8. Data storage means according to one of claims 1 to 7, characterised in that the data cards (1) are each divided into a character field (14) containing light-permeable and light-impermeable addresses and a free field (12).

9. Data storage means according to claim 8, characterised in that the free fields (12) of the data cards (1) are provided with information which is independent from the data of the character field (14).

10. Data storage means according to claim 9, characterised in that the bundle of cards contains an additional register card for facilitating the finding of the information of the free field (12) which is independent from the data of the character field (14).

11. Data storage means according to one of claims 1 to 10, characterised in that the data cards (1) are formed from aperture cards.

12. Data storage means according to claim 11, characterised in that the individual elements of the second data set are each associated with two adjacent addresses of the character field (14) of the aperture cards.

13. Data storage means according to claim 12, characterised in that of the two addresses of the individual elements of the second data set only one is perforated when the probability of a correlation is low and both addresses are perforated when the probability is high.

14. Data storage means according to one of claims 1 to 13, characterised in that under the decoding card (3) several data card rows are arranged over one another, each row being led by a register card (2).

**Revendications**

1. Moyens de mémorisation manuels de données pour déterminer des relations entre des ensembles de données, notamment pour les appliquer comme moyens auxiliaires de diagnostic et pharmaceutiques, comportant une pluralité de cartes de données (1) qui comportent, en correspondance à l'existence ou à l'absence d'une relation entre deux ensembles de données, des adresses transparentes ou opaques à la lumière et qui sont pourvues chacune d'un rebord d'enregistrement (17), ainsi qu'au moins une carte de décodage (3), les cartes (1, 3) étant enfichées sur un axe commun (5) et pouvant tourner indépendamment l'une de l'autre autour de cet axe (5) et la totalité des cartes de données (1) correspond à une premier ensemble de données tandis que la totalité des adresses des différentes cartes de données (1) correspond à un second ensemble de données et, sur la carte de décodage, les adresses des différentes cartes de données sont associées à des numéros de code du second ensemble de données, caractérisés en ce qu'au moins une carte d'enregistrement (2) est engagée sur l'axe commun (5) au-dessus des cartes de données (1) et de la carte de décodage (3), carte d'enregistrement sur laquelle sont enregistrés les différents éléments des informations identifiant le premier ensemble de données, et les rebords d'enregistrement des cartes de données (1) sont disposés chacun à côté de la carte d'enregistrement (2) en étant placé les uns en-dessous des autres et avec un échelonnement suffisant et coïncident par leurs extrémités visibles avec les informations de la carte d'enregistrement (2) identifiant la carte de données (1) correspondant à un rebord d'enregistrement défini (17), et en ce que, sur les cartes de données (1), les adresses correspondant aux différentes éléments du second ensemble de données sont agencées de façon plus ou moins perméables à la lumière en fonction de la probabilité de concordance avec le premier ensemble de données.

2. Moyens de mémorisation de données selon la revendication 1, caractérisés en ce que l'axe commun (5) des cartes (1, 2, 3) est agencé avec une légère courbure pour garantir une application exacte des cartes tournées (1, 3) l'une contre l'autre.

3. Moyens de mémorisation de données selon l'une des revendications 1 et 2, où le faisceau de cartes se composant des cartes enfichées (1, 2, 3) est placé sur une plaque porteuse (4) pourvue d'une butée latérale (8) orientée perpendiculairement au plan de la plaque porteuse (4) et dont la hauteur est supérieure à l'épaisseur du faisceau de cartes, caractérisés en ce qu'une seconde plaque porteuse (4') pouvant pivoter en-dessous des cartes tournées (1, 3) est pourvue d'une butée (6) assurant la disposition ordonnée et la coïncidence mutuelle précise des cartes tournées (1, 3), ainsi que d'une ouverture de réglage (10).

4. Moyens de mémorisation de données selon la revendication 3, caractérisés en ce que les cartes de données (1) et la carte de décodage (3) sont respectivement pourvues d'une ouverture de réglage (13) placée en coïncidence avec l'ouverture de réglage (10) de la plaque porteuse tournée (4').

5. Moyens de mémorisation de données selon la revendication 4, caractérisés en ce qu'ils comportent un organe auxiliaire (20), pourvu avantageusement d'un embout conique (19) et pouvant être engagé au travers de l'ouverture de réglage (13) des cartes tournées (1, 3) dans l'ouverture de réglage (10) de la plaque porteuse tournée (4').

6. Moyens de mémorisation de données selon la revendication 5, caractérisés en ce que l'autre extrémité de l'organe auxiliaire (20) est pourvue d'un crochet (22) pour sortir les différentes cartes de données (1).

7. Moyens de mémorisation de données selon une des revendications 1 à 6, caractérisés en ce que le rebord d'enregistrement (17) des cartes de données (1) est pourvu d'un trou (18) facilitant leur sortie.

8. Moyens de mémorisation de données selon une des revendications 1 à 7, caractérisés en ce que les cartes de données (1) sont divisées en un emplacement de signes (14) contenant des adresses transparentes et opaques à la lumière et en un emplacement libre (12).

9. Moyens de mémorisation de données selon la revendication 8, caractérisés en ce que les emplacements libres (12) des cartes de données (1) sont pourvus d'informations indépendantes des données de l'emplacement de signes (14).

10. Moyens de mémorisation de données selon la revendication 9, caractérisés en ce que le faisceau de cartes contient une carte d'enregistrement additionnel facilitant la recherche des informations, indépendantes des données de l'emplacement de signes (14), de l'emplacement libre (12).

11. Moyens de mémorisation de données selon une des revendications 1 à 10, caractérisés en ce que les cartes de données (1) sont agencées sous forme de cartes perforées.

12. Moyens de mémorisation de données selon la revendication 11, caractérisés en ce qu'aux différents éléments du second ensemble de données sont associées respectivement des adresses, placées l'une à côté de l'autre, de l'emplacement de signes (14) des cartes perforées.

13. Moyens de mémorisation de données selon la revendication 12, caractérisés en ce que, parmi les deux adresses des différents éléments du second ensemble de données, seulement une est perforée dans le cas d'une faible probabilité de concordance alors que les deux adresses sont perforées dans le cas d'une plus grande probabilité.

14. Moyens de mémorisation de données selon une des revendications 1 à 13, caractérisés en ce qu'en-dessous de la carte de décodage (3) sont disposées l'une au-dessous de l'autre plusieurs rangées de cartes de données précédées à chaque fois par une carte d'enregistrement (2).

Fig. 1.

Fig. 2.

Fig. 3.

Fig. 5.

0 063 151